# EUROPEAN PATENT APPLICATION

(11) **EP 1 775 526 A1**
(43) Date of publication of application: **18.04.2007**
(21) Application number: 05765543.3
(22) Date of filing: 08.07.2005
(51) Int. Cl.: F25B 1/00, F25B 29/00, F24H 1/00, F24F 5/00

(54) **HEAT CONVEYANCE SYSTEM**

(30) Priority: 09.07.2004 JP 2004203169
(71) Applicant: DAIKIN INDUSTRIES, LTD., Osaka-shi, Osaka 530-8323 (JP)
(72) Inventor: NISHIMURA, Tadafumi, Daikin Industries, Ltd., Sakai-shi, Osaka 5918511 (JP); YAMAGUCHI, Takahiro, Daikin Industries, Ltd., Sakai-shi, Osaka 5918511 (JP)
(74) Representative: Goddar, Heinz J.
(86) International application number: PCT/JP2005/012648
(87) International publication number: WO 2006/006515

(57) **Abstract**

A heating medium circuit **(90)** is provided with a plurality of circulation pipelines **(40, 49)** along each of which a heat source side appliance **(11),** a utilization side appliance **(13, 45),** and a pump **(41, 42)** are arranged to be capable of operation to cause a heating medium to circulate between the heat source side appliance **(11)** and the utilization side appliance **(13, 45).** A high temperature side communication pipe **(91)** establishes fluid communication between a part between the outflow side of the heat source side appliance **(11)** and the inflow side of the utilization side appliance **(13, 45)** in the circulation pipeline **(40)** and a part between the outflow side of the heat source side appliance **(11)** and the inflow side of the utilization side appliance **(13, 45)** in the circulation pipeline **(49).** In addition, a low temperature side communication pipe **(92)** establishes fluid communication between a part between the outflow side of the utilization side appliance **(13, 45)** and the inflow side of the heat source side appliance **(11)** in the circulation pipeline **(40)** and a part between the outflow side of the utilization side appliance **(13, 45)** and the inflow side of the heat source side appliance **(11)** in the circulation pipeline **(49).**

## Description

### TECHNICAL FIELD

The present invention relates to a heat conveyance system including a heating medium circuit through which a heating medium flows and configured to convey heat to an appliance on the utilization side from a device on the heat source side by the heating medium flowing through the heating medium circuit.

### BACKGROUND ART

Various types of heat conveyance systems, such as refrigeration apparatuses and air conditioning apparatuses, are known in the conventional technology. There is a so-called "pair unit type" heat conveyance system having, as a pair unit, a heat source side appliance and a utilization side appliance. In addition, there is a so-called "multi unit type" heat conveyance system having a plurality of utilization side appliances for a single heat source side appliance. Such heat conveyance systems employ, for example, a refrigerant circuit configured to perform a vapor compression refrigeration cycle.

The pair unit type is generally installed in the home or in small stores. In the pair unit type, a single utilization side appliance effects heating and cooling by a single heat source side appliance. On the other hand, the multi unit type includes a plurality of utilization side appliances sharing a single heat source side appliance, and these utilization side appliances are installed in different locations in the building (see, for example, the following patent documents I and II). In the multi unit type, the single heat source side appliance enables the plural utilization side appliances to effect heating and cooling.
Patent Document I: JP H8-121902A
Patent Document II: JP H7-217933A

### DISCLOSURE OF THE INVENTION

### PROBLEMS THAT THE INVENTION INTENDS TO SOLVE

However, a conventional heat conveyance system of the pair unit type is, even when there is another heat conveyance system in the vicinity, operated independently of the neighbor heat conveyance system. In other words, the problem with the pair unit type heat conveyance system is that it is impossible to unify different heat conveyance systems even when a plurality of consumers exist adjacently to each other, and the total operating efficient cannot be improved.

In addition, for the case of the conventional multi unit type heat conveyance system, it is necessary to install a heat source side appliance having a large capacity corresponding to the total output of all utilization side appliances connected to the heat source unit. Furthermore, thermal energy is distributed from the single heat source side appliance to the plural utilization side appliances, which means that in the event of the failure of the heat source side appliance this produces the problem that all the utilization side appliances become unable to use heat.

With the above in mind, the present invention was made. Accordingly, an object of the present invention is to provide an improved heat conveyance system having a plurality of heat source side appliances with a view to utilizing the ability of each of the heat source side appliances to the maximum extent possible.

### MEANS FOR SOLVING THE PROBLEMS

In order to achieve the above object, pipelines **(40, 49)** capable of operation to cause a heating medium to circulate between a heat source side appliance **(11)** and a utilization side unit **(13, 45)** are arranged in parallel in the present invention.

More specifically, the present invention provides, as a first aspect, a heat conveyance system comprising a heating medium circuit **(90)** through which a heating medium flows and configured to convey heat to a utilization side appliance **(13, 45)** from a heat source side appliance **(11)** by the heating medium in the heating medium circuit **(90).**

The heating medium circuit **(90)** comprises: (a) a plurality of circulation pipelines **(40, 49)** along each of which a heat source side appliance **(11),** a utilization side appliance **(13, 45),** and a pump **(41, 42)** are provided and each capable of operation to cause the heating medium to circulate between the heat source side appliance **(11)** and the utilization side appliance **(13, 45);** (b) a high temperature side communication pipe **(91)** for establishing fluid communication between parts between the outflow sides of the heat source side appliances **(11)** and the inflow sides of the utilization side appliances **(13, 45)** in the plurality of circulation pipelines **(40, 49);** and (c) a low temperature side communication pipe **(92)** for establishing fluid communication between parts between the outflow sides of the utilization side appliances **(13, 45)** and the inflow sides of the heat source side appliances **(11)** in the plurality of circulation pipelines **(40, 49).**

According to the above configuration, when the utilization side appliance **(13, 45)** of any one of the circulation pipelines **(40, 49)** is placed in operation, the heating medium circulates only through the one of the circulation pipelines **(40, 49)** under normal conditions. In other words, the pump **(41, 42)** of the one of the circulation pipelines **(40, 49)** is activated, whereby the heating medium heated up to high temperature by the heat source side appliance **(11)** is supplied to the utilization side appliance **(13, 45).** After its thermal energy is consumed in the utilization side appliance **(13, 45),** the heating medium, which is now at low temperature, again flows into the inflow side of the heat source side appliance **(11).**

If only the operation of the heat source side appliance **(11)** in the one of the circulation pipelines **(40, 49)** results in a deficiency in thermal energy, the heat source side appliance **(11)** of the other of the circulation pipelines **(40, 49)** provides a supply of thermal energy. That is to say, when the pump **(41, 42)** is activated in the one of the circulation pipelines **(40, 49)** that includes the utilization side appliance **(13, 45)** in operation, the heat source side appliance **(11)** of the other of the circulation pipelines **(40, 49)** is also activated, whereby the heating medium flows into the inflow side of that heat source side appliance **(11)** from the low temperature side communication pipe **(92)** and the heating medium heated is supplied to the high temperature side communication pipe **(91).** In the one of the circulation pipelines **(40, 49)** whose utilization side appliance **(13, 45)** is being in operation, the heating medium in the high temperature side communication pipe **(91)** flows into the inflow side of the utilization side appliance **(13, 45)** in addition to the heating medium heated up to high temperature by the heat source side appliance **(11)** of the one of the circulation pipelines **(40, 49).** Then, after the thermal energy of the heating medium is consumed in the utilization side appliance **(13, 45),** part of the heating medium, which is now at low temperature, is discharged to the low temperature side communication pipe **(92).**

In the way as described above, the heat source side appliance **(11)** of the other of the circulation pipelines **(40, 49)** that provides a supply of thermal energy is constantly able to heat the heating medium at low temperature from the low temperature side communication pipe **(92)** and then convey it to the high temperature side communication pipe **(91),** whereby the difference in temperature between the heating medium before heating and the heating medium after heating is secured.

The present invention provides, as a second aspect, a heat conveyance system which is configured such that (i) the pump **(41, 42)** of the circulation pipeline **(40, 49)** is disposed between the junction of the circulation pipeline **(40, 49)** with the high temperature side communication pipe **(91)** and the inflow side of the utilization side appliance **(13, 45);** and (ii) a valve **(43)** is disposed between the junction of the circulation pipeline **(40, 49)** with the high temperature side communication pipe **(91)** and the outflow side of the heat source side appliance **(11).**

According to the above configuration, when the pump **(41, 42)** of the circulation pipeline **(40, 49)** is activated, the heating medium in the high temperature side communication pipe **(91)** is, together with the heating medium heated in the heat source side appliance **(11)** of the circulation pipeline **(40, 49),** drawn into the pump **(41, 42)** and then discharged to the inflow side of the utilization side appliance **(13, 45)** where their thermal energy is consumed. On the other hand, when the pump **(41, 42)** is stopped in one of the circulation pipelines **(40, 49),** the valve **(43)** is closed so that the heating medium will not flow back towards the high temperature side communication pipe **(91)** from the low temperature side communication pipe **(92)** via the heat source side appliance **(11)** brought to a stop, even when the pump **(41, 42)** of the other of the circulation pipelines **(40, 49)** is activated.

The present invention provides, as a third aspect, a heat conveyance system which is configured such that the high temperature side communication pipe **(91)** and the low temperature side communication pipe **(92)** are provided with a tank **(97)** and a tank **(98),** respectively.

According to the above configuration, the heating medium heated in the heat source side appliance **(11)** of each circulation pipeline **(40, 49)** is stored in the tank **(97)** of the high temperature side communication pipe **(91)** while on the other hand the heating medium whose thermal energy has been consumed in the utilization side appliance **(13, 45)** of each circulation pipeline **(40, 49)** is stored in the tank **(98)** of the low temperature side communication pipe **(92).** When the utilization side appliance **(13, 45)** is operated therefore resulting in a deficiency in thermal energy, the high temperature heating medium stored in the tank **(97)** of the high temperature side communication pipe **(91)** flows into the inflow side of the utilization side appliance **(13, 45)** thereof while simultaneously the low temperature heating medium stored in the tank **(98)** of the low temperature side communication pipe **(92)** flows into the inflow side of the heat source side appliance **(11).**

The present invention provides, as a fourth aspect, a heat conveyance system which is configured such that at least either the high temperature side communication pipe **(91)** or the low temperature side communication pipe **(92)** is formed in a loop shape and includes a circulation pump **(93, 94)** for circulating the heating medium.

According to the above configuration, the heating medium in the high temperature side communication pipe **(91)** is circulated by the circulation pump **(93),** whereby the temperature thereof is maintained uniformly throughout the high temperature side communication pipe **(91).** And, when the utilization side appliance **(13, 45)** of each circulation pipeline **(40, 49)** is placed in operation, the high temperature heating medium accumulated in the high temperature side communication pipe **(91)** is supplied to the inflow side of the utilization side appliance **(13, 45).**

Likewise, in the case where the low temperature side communication pipe **(92)** is also formed in a loop shape, the heating medium in the low temperature side communication pipe **(92)** is circulated by the circulation pump **(94),** whereby the temperature thereof is maintained uniformly throughout the low temperature side communication pipe **(92).** When the utilization side appliance **(13, 45)** of each circulation pipeline **(40, 49)** is placed in operation, the low temperature heating medium accumulated in the low temperature side communication pipe **(92)** flows into the inflow side of the heat source side appliance **(11).**

The present invention provides, as a fifth aspect, a heat conveyance system which is configured such that (i) the high temperature side communication pipe **(91)** and the low temperature side communication pipe **(92)** are directly connected together by a bypass pipe **(96)** including a bypass pump **(95)** for forcing the heating medium in the high temperature side communication pipe **(91)** to flow into the low temperature side communication pipe **(92);** and (ii) the bypass pipe **(96)** is openable and closable.

In the case where each utilization side appliance **(13, 45)** has been left unused for long periods, the temperature of the heating medium in the high temperature side communication pipe **(91)** will fall. In such a case, in order to maintain the heating medium in the high temperature side communication pipe **(91)** at high temperature, either the heat source side appliance **(11)** of the circulation pipeline **(40)** or the heat source side appliance **(11)** of the circulation pipeline **(49)** is activated to thereby provide a supply of thermal energy. In this case, according to the configuration of the fifth aspect, by driving the bypass pump **(95)** of the bypass pipe **(96),** the low temperature heating medium in the high temperature side communication pipe **(91)** is discharged directly through the bypass pipe **(96)** to the low temperature side communication pipe **(92)** without flowing through any circulation pipeline, and the heating medium heated in the heat source side appliance **(11)** is supplied into the high temperature side communication pipe **(91).**

The present invention provides, as a sixth aspect, a heat conveyance system which is configured such that (i) the heating medium circuit **(90)** is provided in plural number; and (ii) the high temperature side communication pipes **(91)** of the plural heating medium circuits **(90)** are connected to each other and the low temperature side communication pipes **(92)** of the plural heating medium circuits **(90)** are connected to each other.

According to the above configuration, the plural heating medium circuits **(90)** are connected in parallel with each other, thereby allowing the heating medium to intercommunicate between the high temperature side communication pipes **(91)** of the heating medium circuits **(90)** and allowing the heating medium to intercommunicate between the low temperature side communication pipes **(92)** of the heating medium circuits **(90).** Therefore, the heating medium is shared between the plural heating medium circuits **(90).**

The present invention provides, as a seventh aspect, a heat conveyance system which is configured such that (i) the heating medium circuit **(90)** is provided in plural number; (ii) in each of the plural heating medium circuits **(90)** both the high temperature side communication pipe **(91)** and the low temperature side communication pipe **(92)** are formed in a loop shape; and (iii) the high temperature side communication pipes **(91)** of the plural heating medium circuits **(90)** are connected to each other to form a single loop-shaped pipeline **(191)** and the low temperature side communication pipes **(92)** of the plural heating medium circuits **(90)** are connected to each other to form a single loop-shaped pipeline **(192).**

According to the above configuration, in the high temperature side loop-shaped pipeline **(191)** and the low temperature side loop-shaped pipeline **(192),** their respective heating mediums are circulated and shared between the heating medium circuits **(90).**

The present invention provides, as an eighth aspect, a heat conveyance system which is configured such that (a) the high temperature side communication pipes **(91)** of the plural heating medium circuits **(90)** are connected to each other by a switch mechanism **(101)** which enables switching between a first distribution mode in which the heating medium is allowed to flow only within each of the high temperature side communication pipes **(91)** and a second distribution mode in which the heating medium is shared by establishing fluid communication with the high temperature side communication pipe **(91)** of the other heating medium circuit **(90)** and (b) the low temperature side communication pipes **(92)** of the plural heating medium circuits **(90)** are connected to each other by a switch mechanism **(102)** which enables switching between a first distribution mode in which the heating medium is allowed to flow only within each of the low temperature side communication pipes **(92)** and a second distribution mode in which the heating medium is shared by establishing fluid communication with the low temperature side communication pipe **(92)** of the other heating medium circuit **(90).**

According to the above configuration, when the switch mechanism **(101)** enters the first distribution mode, the high temperature side communication pipe **(91)** of each heating medium circuit **(90)** utilizes only the heating medium therein, while on the other hand when the switch mechanism **(101)** enters the second distribution mode the high temperature side communication pipe **(91)** of each heating medium circuit **(90)** is allowed to share the heating medium in the high temperature side communication pipe **(91)** of the other heating medium circuit **(90).** Likewise, when the switch mechanism **(102)** enters the first distribution mode, the low temperature side communication pipe **(92)** of each heating medium circuit **(90)** utilizes only the heating medium therein, while on the other hand when the switch mechanism **(102)** enters the second distribution mode the low temperature side communication pipe **(92)** of each heating medium circuit **(90)** is allowed to share the heating medium in the low temperature side communication pipe **(92)** of the other heating medium circuit **(90).** In the way as described above, each heating medium circuit **(90)** is switchable between the first mode in which the heating medium is transferred only therewithin and the second mode in which the heating medium in the other heating medium circuit **(90)** is also utilized.

### ADVANTAGEOUS EFFECTS OF THE INVENTION

As described above, .in the first aspect of the present invention, the heating medium circuit **(90)** is provided with the plural circulation pipelines **(40, 49)** capable of operation to cause the heating medium to circulate between the heat source side appliance **(11)** and the utilization side appliance **(13, 45);** the part between the outflow side of the heat source side appliance **(11)** and the inflow side of the utilization side appliance **(13, 45)** in the circulation pipeline **(40)** and the part between the outflow side of the heat source side appliance **(11)** and the inflow side of the utilization side appliance **(13, 45)** in the circulation pipeline **(49)** are connected together by the high temperature side communication pipe **(91);** and the part between the outflow side of the utilization side appliance **(13, 45)** and the inflow side of the heat source side appliance **(11)** in the circulation pipeline **(40)** and the part between the outflow side of the utilization side appliance **(13, 45)** and the inflow side of the heat source side appliance **(11)** in the circulation pipeline **(49)** are connected together by the low temperature side communication pipe **(92).** Therefore, if one of the circulation pipelines **(40, 49)** becomes deficient in thermal energy, the low temperature heating medium flowing in from the low temperature side communication pipe **(92)** is heated in the heat source side appliance **(11)** of the other of the circulation pipelines **(40, 49)** and then conveyed to the high temperature side communication pipe **(91)** to fill up a deficiency in thermal energy in the one of the circulation pipelines **(40, 49).** This makes it possible to fully utilize the ability of the heat source side appliance **(11)** of each circulation pipeline **(40, 49).**

According to the second aspect of the present invention, during driving of the pump **(41, 41)** in the circulation pipeline **(40, 49),** the heating medium in the high temperature side communication pipe **(91)** flows, together with the heating medium heated in the heat source side appliance **(11)** of the circulation pipeline **(40, 49),** into the inflow side of the utilization side appliance **(13, 45),** while at the time when the pump **(41, 41)** in the circulation pipeline **(40, 49)** is stopped the valve **(43)** is closed so that the heating medium is prevented from flowing back towards the high temperature side communication pipe **(91)** from the low temperature side communication pipe **(92).** Consequently, the high temperature heating medium in the high temperature side communication pipe **(91)** will not flow out towards the low temperature side communication pipe **(92),** thereby making it possible to provide a high efficiency heat conveyance system.

According to the third aspect of the present invention, the tank **(97)** of the high temperature side communication pipe **(91)** stores heating medium at high temperature while the tank **(98)** of the low temperature side communication pipe **(92)** stores heating medium at low temperature. Consequently, the high temperature heating medium stored in the tank **(97)** of the high temperature side communication pipe **(91)** can be stably supplied to the inflow side of the utilization side appliance **(13, 45)** and, in addition, the low temperature heating medium stored in the tank **(98)** of the low temperature side communication pipe **(92)** can be stably supplied to the inflow side of the heat source side appliance **(11).**

In the fourth aspect of the present invention, at least either the high temperature side communication pipe **(91)** or the low temperature side communication pipe **(92)** is formed in a loop shape and the heating medium is circulated by means of the circulation pump **(93, 94).** Consequently, the heating medium whose temperature is maintained uniformly throughout the loop-shaped pipe is supplied to each circulation pipeline **(40, 49),** thereby making it possible to provide a still higher efficiency heat conveyance system.

In the fifth aspect of the present invention, the high temperature side communication pipe **(91)** and the low temperature side communication pipe **(92)** are directly connected together by the bypass pipe **(96)** and the heating medium in the high temperature side communication pipe **(91)** is made to flow into the low temperature side communication pipe **(92)** by the bypass pump **(95)** where appropriate. Consequently, the heating medium having fallen to a low temperature in the high temperature side communication **(91)** can be discharged to the low temperature side communication pipe **(92)** and the heating medium heated in the heat source side appliance **(11)** can be made to flow into the high temperature side communication pipe **(91),** thereby making it possible to efficiently provide a supply of thermal energy to the high temperature side communication pipe **(91).**

In the sixth aspect of the present invention, the plural heating medium circuits **(90)** are connected to each other by their high temperature side communication pipes **(91)** as well as by their low temperature side communication pipes **(92).** Consequently, the heating medium can be shared among the plural heating medium circuits **(90),** thereby making it possible to fully utilize the ability of the heat source side appliance **(11)** in_each heating medium circuit **(90).**

In the seventh aspect of the present invention, the high temperature side communication pipes **(91)** of the plural heating medium circuits **(90)** are connected together to form the single loop-shaped pipeline **(191)** and the low temperature side communication pipes **(92)** of the plural heating medium circuits **(90)** are connected together to form the single loop-shaped pipeline **(192).** Consequently, the heating medium circulating in each loop-shaped pipeline **(191, 192)** can be shared between the heating medium circuits **(90),** thereby making it possible to fully utilize the ability of the heat source side appliance **(11)** in each heating medium circuit **(90).**

In the eighth aspect of the present invention, the high temperature side communication pipes **(91)** of the heating medium circuits **(90)** are connected to each other by the switch mechanism **(101)** and the low temperature side communication pipes **(92)** of the heating medium circuits **(90)** are connected to each other by the switch mechanism **(102).** Consequently, each heating medium circuit **(90)** becomes switchable between a narrow-region conveyance mode in which the heating medium is conveyed only therewithin and a wide-region conveyance mode in which the heating medium in the other heating medium circuit **(90)** is also utilized. This therefore makes it possible to further fully utilize the ability of the heat source side appliance **(11)** in each heating medium circuit **(90).**

### BRIEF DESCRIPTION OF THE DRAWINGS

Figure **1** is a piping schematic diagram of a heat conveyance system according to a first embodiment of the present invention;
Figure **2** is a piping schematic diagram of a heat conveyance system according to a second variation of the first embodiment;
Figure **3** is a piping schematic diagram of a heat conveyance system according to a third variation of the first embodiment;
Figure **4** is a piping schematic diagram of a heat conveyance system according to a second embodiment of the present invention; and
Figure **5** is a piping schematic diagram of a heat conveyance system according to a variation of the second embodiment.

### REFERENCE NUMERALS IN THE DRAWINGS

- 10:: heat conveyance system
- 11:: heat source unit (heat source side appliance)
- 13:: high temperature hot water supply unit (utilization side appliance)
- 40:: first circulation pipeline
- 41:: floor heating side pump
- 42:: hot water supply side pump
- 43:: flow rate control valve (valve)
- 45:: floor heating radiator (utilization side appliance)
- 49:: second circulation pipeline
- 90:: heating medium circuit
- 91:: high temperature side communication pipe
- 92:: low temperature side communication pipe
- 93, 94:: circulation pump
- 95:: bypass pump
- 96:: bypass pipe
- 97, 98:: tank
- 101, 102:: switch mechanism
- 191, 192:: loop-shaped pipeline

### BEST EMBODIMENT MODE FOR CARRYING OUT THE INVENTION

Hereinafter, preferred embodiments of the present invention are described with reference to the drawings. It should be noted, however, that the following embodiments are essentially preferable examples which are not meant to limit the present invention, its application, or its range of application.

### FIRST EMBODIMENT

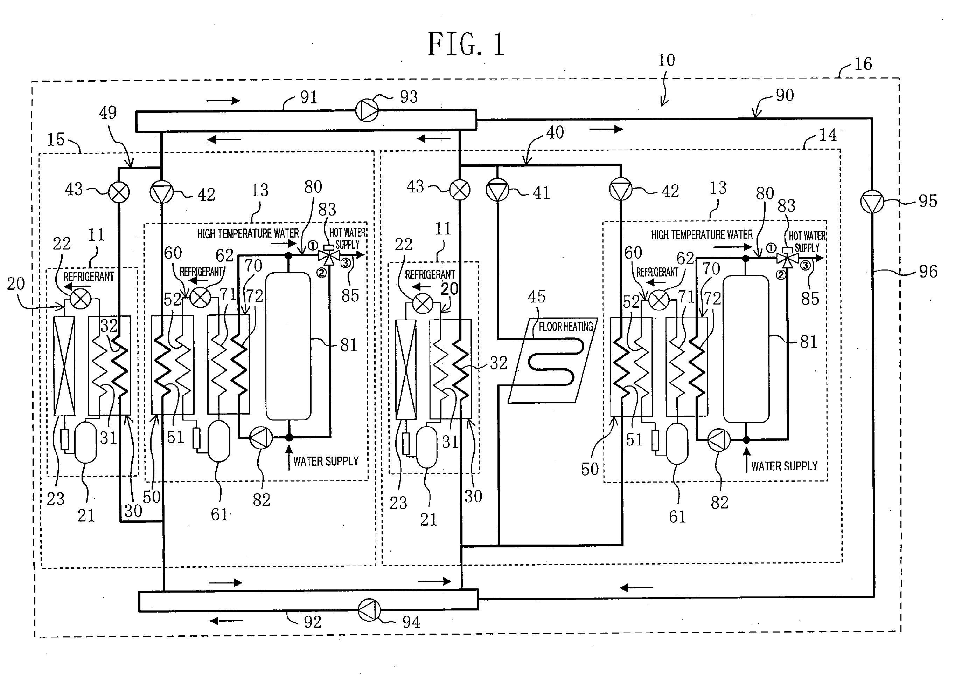

Referring to Figure **1,** there is shown a heat conveyance system **(10)** according to a first embodiment of the present invention. The heat conveyance system **(10)** of the first embodiment is for sharing of a heat source between a plurality of dwelling units **(14, 15)** in a multiple unit complex **(16)** (for the sake of simplicity of description, two dwelling units in the first embodiment), and includes a heating medium circuit **(90)** through which a heating medium (heat transfer water) flows. This heating medium circuit **(90)** is provided with a first circulation pipeline **(40)** and a second circulation pipeline **(49).**

The first circulation pipeline **(40)** is arranged in the first dwelling unit **(14)** and extended through a heat source unit **(11)** as a heat source side appliance, a high temperature hot water supply unit **(13)** as a utilization side appliance, and a floor heating radiator **(45)** as a utilization side appliance. The first circulation pipeline **(40)** includes a first heat exchanger **(30),** two pumps **(41, 42)** respectively for the high temperature hot water supply unit **(13)** and the floor heating radiator **(45),** a flow rate control valve **(43),** and a second heat exchanger **(50).** The first circulation pipeline **(40)** is configured such that it is capable of operation to cause heat transfer water to circulate between the heat source unit **(11),** the high temperature hot water supply unit **(13),** and the floor heating radiator **(45).**

The heat source unit **(11)** has a first refrigerant circuit **(20).** The first refrigerant circuit **(20)** includes a first compressor **(21),** a first outdoor heat exchanger **(23),** a first expansion valve **(22),** and a first heat exchanger **(30).** The first refrigerant circuit **(20)** is charged with a first refrigerant. As the first refrigerant, hydrocarbon (HC) refrigerants such as methane, propane et cetera may be used in addition to the so-called fluorocarbon refrigerant including R407C, R410A et cetera. The outdoor heat exchanger **(23)** is a fin and tube heat exchanger of the cross fin type. The outdoor heat exchanger **(23)** causes the first refrigerant to exchange heat with outdoor air. The first heat exchanger **(30)** is implemented by a so-called plate heat exchanger. The first heat exchanger **(30)** is provided with a plurality of first flow paths **(31)** and a plurality of second flow paths **(32)** which are partitioned from each other. In the first refrigerant circuit **(20),** the first compressor **(21)** is connected, at its discharge and suction sides, to the first heat exchanger **(30)** and to the outdoor heat exchanger **(23),** respectively. One end of the first expansion valve **(22)** is connected to the outdoor heat exchanger **(23)** and the other end thereof is connected to the first heat exchanger **(30).**

In the first circulation pipeline **(40),** one end of the flow rate control valve **(43)** is connected to the second flow path **(32)** while the other end thereof is connected to the suction side of the floor heating side pump **(41).** One end of the floor heating radiator **(45)** is connected to the discharge side of the floor heating side pump **(41)** while the other end thereof is connected to the second flow path **(32)** of the first heat exchanger **(30).**

One end of the first flow path **(51)** of the second heat exchanger **(50)** is connected to the discharge side of the hot water supply side pump **(42)** while the other end thereof is connected to a line by which the second flow path **(32)** of the first heat exchanger **(30)** and the other end of the floor heating radiator **(45)** are connected together.

The high temperature hot water supply unit **(13)** accommodates a second refrigerant circuit **(60).** Disposed along the second refrigerant circuit **(60)** are a second compressor **(61),** a third heat exchanger **(70),** a second expansion valve **(62),** and the second heat exchanger **(50).** In addition, the second refrigerant circuit **(60)** is charged with a second refrigerant. As the second refrigerant, carbon dioxide (CO₂) is used.

The third heat exchanger **(70)** is implemented by a so-called double pipe heat exchanger and has a first flow path **(71)** and a second flow path **(72)** which are partitioned from each other.

In the second refrigerant circuit **(60),** the discharge side of the second compressor **(61)** is connected to one end of the first flow path **(71)** of the third heat exchanger **(70).** The other end of the first flow path **(71)** of the third heat exchanger **(70)** is connected, through the second expansion valve **(62),** to one end of the second flow path **(52)** of the second heat exchanger **(50).** The other end of the second flow path **(52)** of the second heat exchanger **(50)** is connected to the suction side of the second compressor (61).

The high temperature hot water supply unit **(13)** is provided with a high temperature water circuit **(80).** Disposed along the high temperature water circuit **(80)** are a hot water storage tank **(81),** a water supply pump **(82),** the third heat exchanger **(70),** and a mixing valve **(83).**

The mixing valve **(83)** has three ports and controls the rate at which a fluid flowing into the first port and a fluid flowing into the second port are mixed, and the mixture is delivered out of the third port. The hot water storage tank **(81)** is shaped like a longitudinally elongated, cylinder-shaped, hermetically-sealed container.

In the high temperature water circuit **(80),** the discharge side of the water supply pump **(82)** is connected to one end of the second flow path **(72)** of the third heat exchanger **(70).** The second flow path **(72)** of the third heat exchanger **(70)** is connected, at the other end thereof, to the first port of the mixing valve **(83).** The second port of the mixing valve **(83)** is connected to the suction side of the water supply pump **(82).** Connected to the third port of the mixing valve **(83)** is a hot water supply pipe **(85)** which extends towards the utilization side such a kitchen, a washstand, a bathroom et cetera. The hot water storage tank **(81)** is connected, at its bottom and top, to a line which establishes connection between the mixing valve **(83)** and the water supply pump **(82)** and to a line which establishes connection between the second flow path **(72)** of the third heat exchanger **(70)** and the mixing valve **(83),** respectively. A supply of water is provided to the high temperature water circuit **(80)** from the outside and then introduced to the bottom of the hot water storage tank **(81).**

On the other hand, the second circulation pipeline **(49)** is arranged in the second dwelling unit **(15).** The second circulation pipeline **(49)** is similar in configuration to the first circulation pipeline **(40),** except for the omission of the floor heating radiator **(45),** the floor heating side pump **(41),** and the line for connecting them. Consequently, the same reference numerals refer to the same parts as the first circulation pipeline **(40)** and their detailed description is omitted.

The heat conveyance system **(10)** is provided with a high temperature side communication pipe **(91)** and a low temperature side communication pipe **(92)** which extend between the first dwelling unit **(14)** and the second dwelling unit **(15).** The high temperature side communication pipe **(91)** is formed in a loop shape and has a high temperature side circulation pump **(93)** for circulation of the heat transfer water. Likewise, the low temperature side communication pipe **(92)** is also formed in a loop shape and has a low temperature side circulation pump **(94)** for circulation of the heat transfer water.

The high temperature side communication pipe **(91)** establishes fluid communication between the first circulation pipeline **(40)** and the second circulation pipeline **(49).** The first circulation pipeline **(40)** is connected, at its part situated between the one end of the flow rate control valve **(43)** and the suction side of the floor heating side pump **(41)** (i.e., between the outflow side of the first heat exchanger **(30)** and the inflow side of the floor heating radiator **(45)),** to the high temperature side communication pipe **(91).** On the other hand, the second circulation pipeline **(49)** is connected, at its part situated between the one end of the flow rate control valve **(43)** and the suction side of the hot water supply side pump **(42)** (i.e., between the outflow side of the first heat exchanger **(30)** and the inflow side of the second heat exchanger **(50)),** to the high temperature side communication pipe **(91).**

The low temperature side communication pipe **(92)** establishes fluid communication between the first circulation pipeline **(40)** and the second circulation pipeline **(49).** The first circulation pipeline **(40)** is connected, at its part situated between the outflow side of the floor heating radiator **(45)** and the inflow side of the first heat exchanger **(30),** to the low temperature side communication pipe **(92).** The second circulation pipeline **(49)** is connected, at its part situated between the outflow side of the second heat exchanger **(50)** and the inflow side of the first heat exchanger **(30),** to the low temperature side communication pipe **(92).**

In addition, the high temperature side communication pipe **(91)** and the low temperature side communication pipe **(92)** are directly connected together by a bypass pipe **(96)** having a bypass pump **(95)** for causing the heat transfer water in the high temperature side communication pipe **(91)** to flow into the low temperature side communication pipe **(92).** The provision of the bypass pipe **(96)** makes it possible to allow the heat transfer water to directly flow into the low temperature side communication pipe **(92)** where appropriate.

The heating medium which is charged in the first circulation pipeline **(40)** is not limited to water. For example, brine such as ethylene glycol aqueous solution et cetera may be used as a heating medium. In addition, the utilization side appliance to which the first circulation pipeline **(40)** is connected is not limited to the floor heating radiator **(45).** For example, appliances, such as a hot water heating device, a bathroom drying device et cetera which are configured to heat air with heat transfer water, may be connected, as a utilization side appliance, to the first circulation pipeline **(40).**

### RUNNING OPERATION

The running operation of the heat conveyance system **(10)** of the first embodiment is described.

In the first place, the operation of the first refrigerant circuit **(20)** in the first circulation pipeline **(40)** is described.

Upon operation of the first compressor **(21),** the first refrigerant is circulated in the first refrigerant circuit **(20)** to thereby perform a refrigeration cycle. During the refrigeration cycle, in the first refrigerant circuit **(20)** the first heat exchanger **(30)** operates as a condenser while the outdoor heat exchanger **(23)** operates as an evaporator. More specifically, the first refrigerant discharged out of the first compressor **(21)** flows into the first flow path **(31)** of the first heat exchanger **(30).** The first refrigerant having flowed into the first flow path **(31)** of the first heat exchanger **(30)** dissipates heat to the heat transfer water in the first circulation pipeline **(40)** and condenses. Thereafter, the first refrigerant is decompressed during passage through the first expansion valve **(22)** and then flows into the outdoor heat exchanger **(23).** In the outdoor heat exchanger **(23),** the first refrigerant having flowed thereinto absorbs heat from outdoor air and evaporates. As a result, the outdoor air is cooled. The first refrigerant evaporated in the outdoor heat exchanger **(23)** is drawn into the first compressor **(21)** where it is compressed.

Next, the operation of each of the first circulation pipeline **(40),** the second refrigerant circuit **(60),** and the high temperature water circuit **(80)** is described.

Upon operation of the hot water supply side pump **(42)** of the first circulation pipeline **(40),** the heat transfer water is circulated in the first circulation pipeline **(40).** The heat transfer water having flowed into the second flow path **(32)** of the first heat exchanger **(30)** is heated by the first refrigerant flowing in the first flow path **(31)** of the first heat exchanger **(30).** The heat transfer water, heated up to an intermediate temperature of about 30-60 degrees Centigrade during passage through the second flow path **(32),** flows into the flow rate control valve **(43).** The flow rate control valve **(43)** is set such that it allows passage of an appropriate amount of heat transfer water during the operation of the hot water supply side pump **(42).** In addition, when the floor heating side pump **(41)** of the first circulation pipeline **(40)** is placed in operation, a portion of the intermediate temperature heat transfer water flows into the floor heating radiator **(45)** while the other heat transfer water flows into the first flow path **(51)** of the second heat exchanger **(50).** The heat transfer water having dissipated heat to indoor air in the floor heating radiator **(45)** flows into the second flow path **(32)** of the first heat exchanger **(30)** where it is heated. Likewise, the heat transfer water having dissipated heat to the second refrigerant in the second flow path **(52)** of the second heat exchanger **(50)** flows into the second flow path **(32)** of the first heat exchanger **(30)** where it is heated.

It is possible to change the ratio between the flow rate of heat transfer water flowing towards the floor heating radiator **(45)** and the flow rate of heat transfer water flowing towards the second heat exchanger **(50)** by controlling the hot water supply side pump **(42)** and the floor heating side pump **(41).**

In addition, if the hot water supply side pump **(42)** is set to stop while the floor heating side pump **(41)** is set to operate, this setting causes the heat transfer water heated in the first heat exchanger **(30)** to be supplied only to the floor heating radiator **(45).** On the other hand, if the hot water supply side pump **(42)** is set to operate while the floor heating side pump **(41)** is set to stop, this setting causes the heat transfer water heated in the first heat exchanger **(30)** to be supplied only to the second heat exchanger **(50).**

If the supply of thermal energy from the heat source unit **(11)** of the first circulation pipeline **(40)** alone is insufficient, thermal energy is supplied also from the second circulation pipeline **(49).** In other words, the heat source unit **(11)** of the second circulation pipeline **(49)** is activated, whereby the heat transfer water is heated and then supplied, by way of the flow rate control valve **(43),** to the high temperature side communication pipe **(91).** And, the heat transfer water supplied to the first circulation pipeline **(40)** from the high temperature side communication pipe **(91)** is, together with the heat transfer water heated in the heat source unit **(11)** of the first circulation pipeline **(40),** supplied either to the first flow path **(51)** of the second heat exchanger **(50)** by way of the hot water supply side pump **(42),** or to the floor heating radiator **(45)** by way of the floor heating side pump **(41).** At the same time, the low temperature heat transfer water is supplied to the second flow path **(32)** of the first heat exchanger **(30)** in the second circulation pipeline **(49)** from the low temperature side communication pipe **(92).**

In addition, also in the event of the failure of the heat source unit **(11)** of the first circulation pipeline **(40),** the second circulation pipeline **(49)** provides a supply of thermal energy. In other words, the heat source unit **(11)** of the second circulation pipeline **(49)** is activated, whereby the heat transfer water is heated and then supplied, by way of the flow rate control valve **(43),** to the high temperature side communication pipe **(91).** And, the heat transfer water circulated by the high temperature side circulation pump **(93)** is supplied from the high temperature side communication pipe **(91)** to the first flow path **(51)** of the second heat exchanger **(50)** by way of the hot water supply side pup **(42),** or to the floor heating radiator **(45)** by way of the floor heating side pump **(41).** At the same time, the low temperature heat transfer water is supplied to the second flow path **(32)** of the first heat exchanger **(30)** in the heat source unit **(11)** of the second circulation pipeline **(49)** from the low temperature side communication pipe **(92).**

Upon operation of the second compressor **(61)** of the second refrigerant circuit **(60),** the second refrigerant is circulated in the second refrigerant circuit **(60)** to thereby perform a refrigeration cycle. During the refrigeration cycle, in the second refrigerant circuit **(60)** the third heat exchanger **(70)** operates as a condenser and the second heat exchanger **(50)** operates as an evaporator. In addition, in the second refrigerant circuit **(60),** the high pressure of the refrigeration cycle is set above the critical pressure of the second refrigerant. Stated another way, a so-called supercritical cycle is performed in the second refrigerant circuit **(60).**

More specifically, the second refrigerant discharged out of the second compressor **(61)** flows into the first flow path **(71)** of the third heat exchanger **(70),** dissipates heat to water for use in hot water supply flowing through the second flow path **(72)** of the third heat exchanger **(70)** and condenses. The second refrigerant condensed in the third heat exchanger **(70)** is decompressed during passage through the second expansion valve **(62)** and then flows into the second flow path **(52)** of the second heat exchanger **(50).** The second refrigerant having flowed into the second flow path **(52)** of the second heat exchanger **(50)** absorbs heat from the heat transfer water flowing through the first flow path **(51)** of the second heat exchanger **(50)** and evaporates. The refrigerant evaporated in the second heat exchanger **(50)** is drawn into the second compressor **(61)** where it is compressed.

Upon operation of the water supply pump **(82)** of the high temperature water circuit **(80),** water for use in hot water supply is distributed in the high temperature water circuit **(80).** The supply water discharged out of the water supply pump **(82)** flows into the second flow path **(72)** of the third heat exchanger **(70)** and is heated by the second refrigerant flowing through the first flow path **(71)** of the third heat exchanger **(70).** The supply water, heated up to a high temperature of about 60-90 degrees Centigrade in the third heat exchanger **(70),** is either supplied through the hot water supply pipe **(85)** to the utilization side or stored in the hot water storage tank **(81).**

If not only the high temperature hot water supply unit **(13)** but also the floor heating radiator **(45)** has been left unused for long periods, the temperature of the heat transfer water in the high temperature side communication pipe **(91)** will fall. In such a case, in order to maintain the temperature of the heat transfer water in the high temperature side communication pipe **(91)** at high temperature, the heat source unit **(11)** of either the first circulation pipeline **(40)** or the second circulation pipeline **(49)** is activated to thereby provide a supply of thermal energy. At this time, by activating the bypass pump **(95)** of the bypass pipe **(96),** the low temperature heating medium in the high temperature side communication pipe **(91)** is discharged directly through the bypass pipe **(96)** to the low temperature side communication pipe **(92)** without flowing through any circulation pipeline, and the heating medium heated in the heat source unit **(11)** is supplied into the high temperature side communication pipe **(91).**

### ADVANTAGEOUS EFFECTS OF THE FIRST EMBODIMENT

In the heat conveyance system **(10)** of the first embodiment, the heating medium circuit **(90)** is provided with the plural circulation pipelines **(40, 49)** capable of operation to cause the heating medium to circulate between the heat source unit **(11)** and the high temperature hot water supply unit **(13)** as well as between the heat source unit **(11)** and the floor heating radiator **(45);** the part between the outflow side of the heat source unit **(11)** and the inflow side of either the high temperature hot water supply unit **(13)** or the floor heating radiator **(45)** in the first circulation pipeline **(40)** and the part between the outflow side of the heat source unit **(11)** and the inflow side of either the high temperature hot water supply unit **(13)** or the floor heating radiator **(45)** in the second circulation pipeline **(49)** are connected together by the high temperature side communication pipe **(91);** and the part between the outflow side of either the high temperature hot water supply unit **(13)** or the floor heating radiator **(45)** and the inflow side of the heat source unit **(11)** in the first circulation pipeline **(40)** and the part between the outflow side of either the high temperature hot water supply unit **(13)** or the floor heating radiator **(45)** and the inflow side of the heat source unit **(11)** in the second circulation pipeline **(49)** are connected together by the low temperature side communication pipe **(92).** Consequently, even when there is a lack of thermal energy in either one of the circulation pipelines **(40, 49),** the heat transfer water at low temperature drawn in from the low temperature side communication pipe **(92)** can be heated by the heat source unit **(11)** of the other of the circulation pipelines **(40, 49),** conveyed to the high temperature side communication pipe **(91),** and supplied to the one of the circulation pipelines **(40, 49)** that is lacking thermal energy, thereby making it possible to fully utilize the ability of the heat source unit **(11)** of each circulation pipeline **(40, 49).**

In addition, during driving of the pump **(41, 42)** in the circulation pipeline **(40, 49),** the heat transfer water in the high temperature side communication pipe **(91)** flows, along with the heat transfer water heated in the heat source unit **(11)** of the circulation pipeline (40, **49),** into the inflow side of the high temperature hot water supply unit **(13)** as well as into the inflow side of the floor heating radiator **(45)** while on the other hand when the pump **(41, 42)** in the circulation pipeline **(40, 49)** is stopped the flow rate control valve **(43)** is placed in the closed position so as to prevent the heat transfer water from flowing back from the low temperature side communication pipe **(92)** towards the high temperature side communication pipe **(91).** This therefore prevents the heating medium in the high temperature side communication pipe **(91)** from flowing out towards the low temperature side communication pipe **(92),** thereby making it possible to provide a high efficiency heat conveyance system.

In addition, the high temperature side communication pipe **(91)** and the low temperature side communication pipe **(92)** are each formed in a loop shape and the heat transfer water is circulated by the circulation pumps **(93, 94).** As a result of such arrangement, the heat transfer water, the temperature of which is maintained constant throughout the loop-shaped pipe, is supplied to each circulation pipeline **(40, 49),** thereby making it possible to provide a still higher efficiency heat conveyance system.

In addition, the high temperature side communication pipe **(91)** and the low temperature side communication pipe **(92)** are directly connected together by the bypass pipe **(96),** whereby the heat transfer water in the high temperature side communication pipe **(91)** is made to flow into the low temperature side communication pipe **(92)** by the bypass pump **(95)** where appropriate. This therefore makes it possible to discharge the heat transfer water at low temperature in the high temperature side communication pipe **(91)** to the low temperature side communication pipe **(92)** as well to cause the heat transfer water heated by any one of the heat source units **(11)** to flow into the high temperature side communication pipe **(91),** whereby a supply of thermal energy can be efficiently provided to the high temperature side communication pipe **(91).**

### FIRST VARIATION OF THE FIRST EMBODIMENT

In the first embodiment, the high temperature side communication pipe **(91)** and the low temperature side communication pipe **(92)** are each formed in a loop shape and, in addition, the circulation pumps **(93, 94)** are provided. Alternatively, it may be arranged such that either the high temperature side communication pipe **(91)** or the low temperature side communication pipe **(92)** is formed in a loop shape and the circulation pumps **(93, 94)** are provided. And, the provision of the bypass pipe **(96)** is not inevitable.

### SECOND VARIATION OF THE FIRST EMBODIMENT

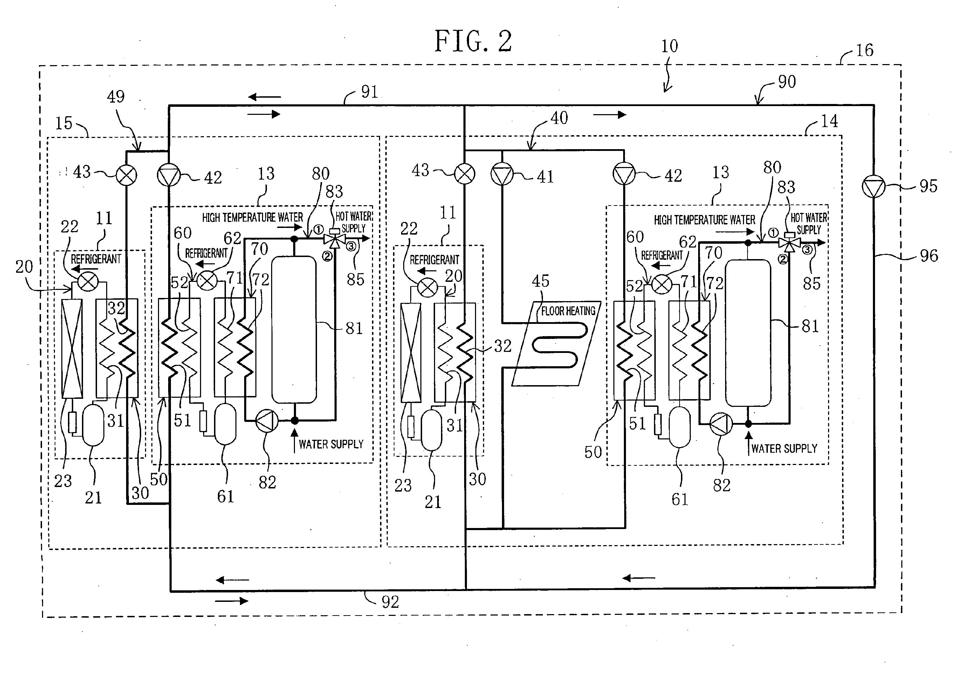

As shown in Figure **2,** it may be arranged such that neither the high temperature side communication pipe **(91)** nor the low temperature side communication pipe **(92)** is formed in a loop shape. In this case, the high temperature side communication pipe **(91)** and the low temperature side communication pipe **(92)** are arranged such that they are connected together by a single pipe. Since the high temperature side communication pipe **(91)** and the low temperature side communication pipe **(92)** each have a certain length enough to allow the heat transfer water in each pipe to store thermal energy therein.

### THIRD VARIATION OF THE FIRST EMBODIMENT

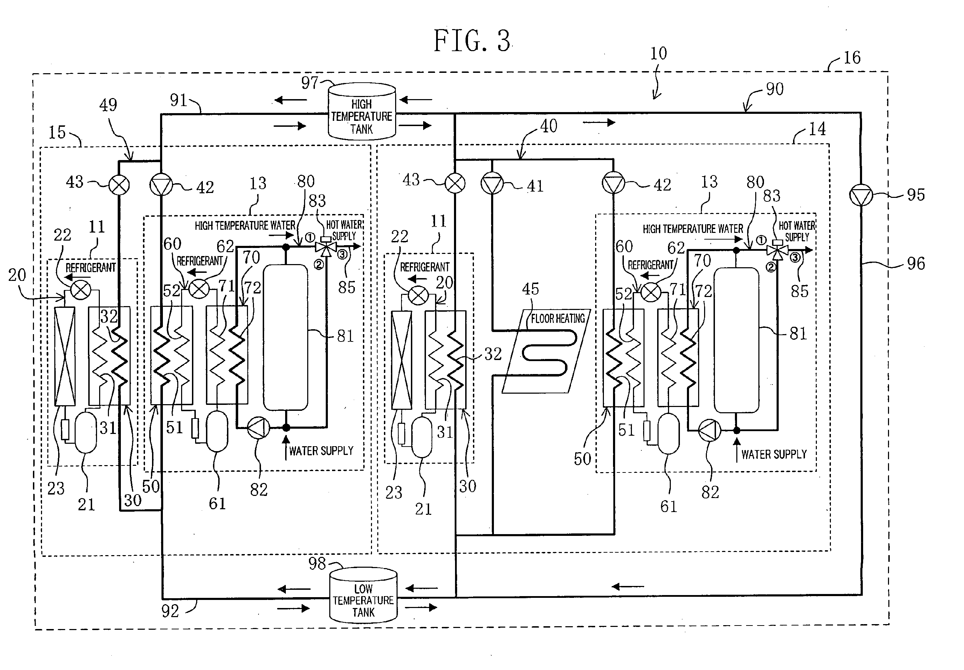

As shown in Figure **3,** the high temperature side communication pipe **(91)** and the low temperature side communication pipe **(92)** may be provided with a heat transfer water storage tank **(97)** and a heat transfer water storage tank **(98),** respectively. The high temperature side tank **(97)** of the high temperature side communication pipe **(91)** is used for the storage of heat transfer water heated in the heat source unit **(11)** of each circulation pipeline **(40, 49)** while one the other hand the low temperature side tank **(98)** of the low temperature side communication pipe **(92)** is used for the storage of heat transfer water after thermal energy consumption in either the high temperature hot water supply unit **(13)** or the floor heating radiator **(45)** of each circulation pipeline **(40, 49).** When either the high temperature hot water supply unit **(13)** or the floor heating radiator **(45)** of one of the circulation pipelines **(40, 49)** is placed in operation, the heat transfer water at high temperature stored in the high temperature side tank **(97)** is supplied to the inflow side of either the high temperature hot water supply unit **(13)** or the floor heating radiator **(45),** whichever is being operated, while simultaneously the heat transfer water at low temperature stored in the low temperature side tank **(98)** is supplied to the inflow side of the heat source unit **(11)** of the other of the circulation pipelines **(40, 49).**

Owing to the above, the heat transfer water at high temperature stored in the high temperature side tank **(97)** can be stably supplied to the inflow side of the high temperature hot water supply unit **(13)** as well as to the inflow side of the floor heating radiator **(45)** and, in addition, the heat transfer water at low temperature stored in the low temperature side tank (98) can be stably supplied to the inflow side of the heat source unit **(11).**

### SECOND EMBODIMENT

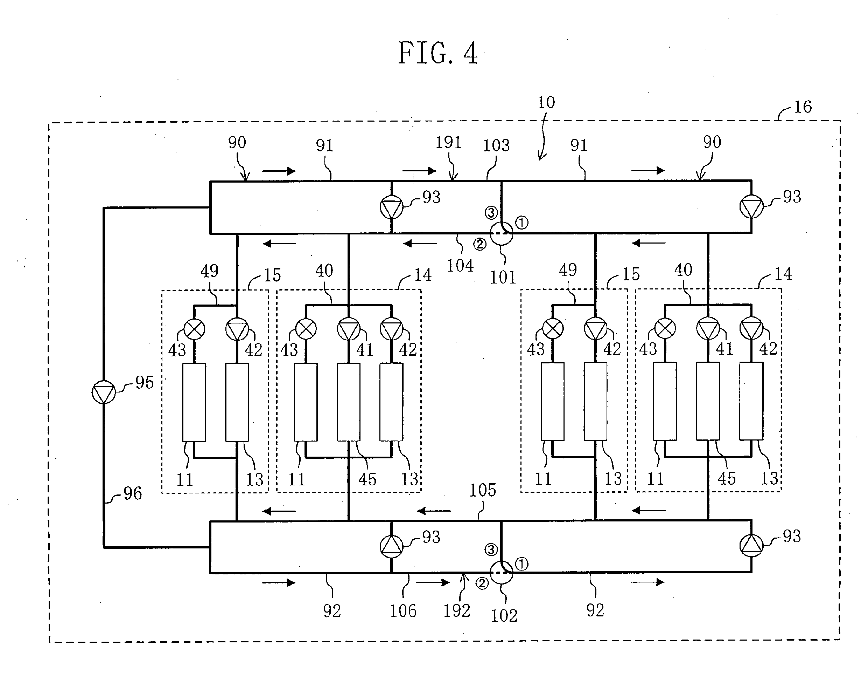

Referring to Figure **4,** there is shown a heat conveyance system **(10)** according to a second embodiment of the present invention. The second embodiment differs from the first embodiment in that the heating medium circuit **(90)** is provided in plural number. The same reference numerals refer to the same parts as Figure **1** and their detailed description is omitted.

For the case of the heat conveyance system **(10)** of the second embodiment, a plurality of heating medium circuits **(90)** according to the first embodiment are arranged in the multiple unit complex **(16)** (for the sake of simplicity of description, two heating medium circuits **(90)** in the second embodiment). The high temperature side communication pipes **(91)** of the heating medium circuits **(90)** are connected to each other by first and second connection pipes **(103, 104),** thereby forming a single high temperature side loop-shaped pipeline **(191).** In addition, the low temperature side communication pipes **(92)** of the heating medium circuits **(90)** are connected to each other by third and fourth connection pipes **(105, 106),** thereby forming a single low temperature side loop-shaped pipeline **(192).**

The second connection pipe **(104)** and the high temperature side communication pipe **(91)** of each heating medium circuit **(90)** are connected to each other by a high temperature side three way control valve **(101)** as a switch mechanism. The fourth connection pipe **(106)** and the low temperature side communication pipe **(92)** of each heating medium circuit **(90)** are connected to each other by a low temperature side three way control valve **(102)** as a switch mechanism.

The three way control valves **(101, 102)** each have three ports and are switchable between a first operation in which the inflow of fluid into the first port is delivered to the third port (first distribution mode) and a second operation in which the inflow of fluid into the first port is delivered to the second port (second distribution mode).

More specifically, by virtue of the high temperature side three way control valve **(101),** the high temperature side communication pipe **(91)** of each heating medium circuit **(90)** is made switchable between the first distribution mode in which the heating medium is made to flow only through its high temperature side communication pipe **(91)** and the second distribution mode in which the heating medium is shared by establishing fluid communication with the high temperature side communication pipe **(91)** of the other heating medium circuit **(90).**

In addition, by virtue of the low temperature side three way control valve **(102),** the low temperature side communication pipe **(92)** of each heating medium circuit **(90)** is made switchable between the first distribution mode in which the heating medium is made to flow only through its low temperature side communication pipe **(92)** and the second distribution mode in which the heating medium is shared by establishing fluid communication with the low temperature side communication pipe **(92)** of the other heating medium circuit **(90).**

### RUNNING OPERATION

The running operation of the heat conveyance system **(10)** of the second embodiment is described.

During the first operation of the three way control valve **(101, 102),** each heating medium circuit **(90)** performs its running operation independently of the other heating medium circuit **(90).** This running operation is the same as the running operation in the first embodiment and its detailed description is omitted here. Each heating medium circuit **(90)** utilizes only the heat transfer water in its high temperature side communication pipe **(91)** and utilizes only the heat transfer water in its low temperature side communication pipe **(92).**

On the other hand, during the second operation of the three way control valve **(101, 102),** the sharing of heat transfer water takes place between the heating medium circuits **(90).** In other words, since the plural heating medium circuits **(90)** are connected in parallel, this makes it possible to convey the heat transfer water from the high temperature side communication pipe **(91)** of one heating medium circuit **(90)** which is being surplus in thermal energy to the high temperature side communication pipe **(91)** of another heating medium circuit **(90)** which is being deficient in thermal energy. At the same time, in order to achieve a balance between the income of heat transfer water and the outgo of heat transfer water, the heat transfer water is conveyed from the low temperature side communication pipe **(92)** of the heating medium circuit **(90)** which is being deficient in thermal energy to the low temperature side communication pipe **(92)** of the heating medium circuit **(90)** which is being surplus in thermal energy. Because of this, the heat transfer water is shared between the heating medium circuits **(90).**

The operating mode of the three way control valves **(101, 102)** is switched in the way as described above, thereby making it possible to establish switching between the operating mode in which each heating medium circuit **(90)** conveys the heat transfer water only within itself and the operating mode in which each heating medium circuit **(90)** is allowed to utilize the heat transfer water in the other heating medium circuit **(90). ADVANTAGEOUS EFFECTS OF THE SECOND EMBODIMENT**

In the second embodiment, the plural heating medium circuits **(90)** are connected to each other by their respective high temperature side communication pipes **(91)** and by their respective low temperature side communication pipes **(92).** This makes it possible to provide sharing of the heat transfer water among the plural heating medium circuits **(90),** whereby the ability of the heat source unit **(11)** in each heating medium circuit **(90)** can be fully utilized.

In addition, the high temperature side communication pipes **(91)** of the heating medium circuits **(90)** are connected to each other by the high temperature side switch mechanism **(101)** while on the other hand the low temperature side communication pipes **(92)** of the heating medium circuits **(90)** are connected to each other by the low temperature side switch mechanism **(102).** This therefore enables each heating medium circuit **(90)** to make a switch between the narrow region conveyance mode in which the heat transfer water is conveyed within itself and the broad region conveyance mode in which the heat transfer water in the other heating medium circuit **(90)** is also utilized. Accordingly, the ability of the heat source unit **(11)** in each heating medium circuit **(90)** can be fully utilized.

### VARIATION OF THE SECOND EMBODIMENT

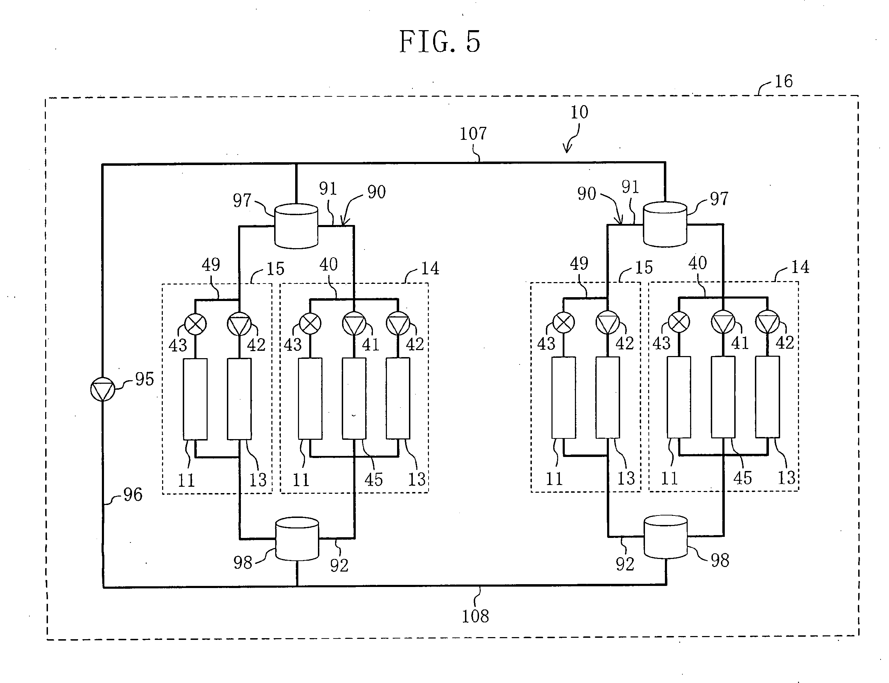

As shown in Figure 5, a plurality of heating medium circuits **(90)** of the third variation of the first embodiment (shown in Figure **3)** may be connected. Stated another way, it may be arranged such that the high temperature side tanks **(97)** of the plural heating medium circuits **(90)** are connected together by a high temperature side connection line **(107)** while the low temperature side tanks **(98)** of the plural heating medium circuits **(90)** are connected together by a low temperature side connection line **(108).**

### INDUCTRIAL APPLICABILITY

As has been described above, the present invention is useful for heat conveyance systems when the heat source is shared between a plurality of rooms or dwelling units in a multiple unit complex.

## Claims

1. A heat conveyance system comprising a heating medium circuit **(90)** through which a heating medium flows and configured to convey heat to a utilization side appliance **(13, 45)** from a heat source side appliance **(11)** by the heating medium in the heating medium circuit **(90),**
the heating medium circuit **(90)** comprising:
(a) a plurality of circulation pipelines **(40, 49)** along each of which a heat source side appliance **(11),** a utilization side appliance **(13, 45),** and a pump **(41, 42)** are provided and each capable of operation to cause the heating medium to circulate between the heat source side appliance **(11)** and the utilization side appliance **(13, 45);**
(b) a high temperature side communication pipe **(91)** for establishing fluid communication between parts between the outflow sides of the heat source side appliances **(11)** and the inflow sides of the utilization side appliances **(13, 45)** in the plurality of circulation pipelines **(40, 49);** and
(c) a low temperature side communication pipe **(92)** for establishing fluid communication between parts between the outflow sides of the utilization side appliances **(13, 45)** and the inflow sides of the heat source side appliances **(11)** in the plurality of circulation pipelines **(40, 49).**

2. The heat conveyance system of claim 1 wherein:
(i) the pump **(41, 42)** of the circulation pipeline **(40, 49)** is disposed between the junction of the circulation pipeline **(40, 49)** with the high temperature side communication pipe **(91)** and the inflow side of the utilization side appliance **(13, 45);** and
(ii) a valve **(43)** is disposed between the junction of the circulation pipeline **(40, 49)** with the high temperature side communication pipe **(91)** and the outflow side of the heat source side appliance **(11).**

3. The heat conveyance system of claim 1 wherein the high temperature side communication pipe **(91)** and the low temperature side communication pipe **(92)** are provided with a tank **(97)** and a tank **(98),** respectively.

4. The heat conveyance system of claim 1 wherein at least either the high temperature side communication pipe **(91)** or the low temperature side communication pipe **(92)** is formed in a loop shape and includes a circulation pump **(93, 94)** for circulating the heating medium.

5. The heat conveyance system of claim 1 wherein:
(i) the high temperature side communication pipe **(91)** and the low temperature side communication pipe **(92)** are directly connected together by a bypass pipe **(96)** including a bypass pump **(95)** for forcing the heating medium in the high temperature side communication pipe **(91)** to flow into the low temperature side communication pipe **(92);** and
(ii) the bypass pipe **(96)** is openable and closable.

6. The heat conveyance system of claim 1 wherein:
(i) the heating medium circuit **(90)** is provided in plural number; and
(ii) the high temperature side communication pipes **(91)** of the plural heating medium circuits **(90)** are connected to each other and the low temperature side communication pipes **(92)** of the plural heating medium circuits **(90)** are connected to each other.

7. The heat conveyance system of claim 4 wherein:
(i) the heating medium circuit **(90)** is provided in plural number;
(ii) in each of the plural heating medium circuits **(90)** both the high temperature side communication pipe **(91)** and the low temperature side communication pipe **(92)** are formed in a loop shape; and
(iii) the high temperature side communication pipes **(91)** of the plural heating medium circuits **(90)** are connected to each other to form a single loop-shaped pipeline **(191)** and the low temperature side communication pipes **(92)** of the plural heating medium circuits **(90)** are connected to each other to form a single loop-shaped pipeline **(192).**

8. The heat conveyance system of claim 7 wherein (a) the high temperature side communication pipes **(91)** of the plural heating medium circuits **(90)** are connected to each other by a switch mechanism **(101)** which enables switching between a first distribution mode in which the heating medium is allowed to flow only within each of the high temperature side communication pipes **(91)** and a second distribution mode in which the heating medium is shared by establishing fluid communication with the high temperature side communication pipe **(91)** of the other heating medium circuit **(90)** and (b) the low temperature side communication pipes **(92)** of the plural heating medium circuits **(90)** are connected to each other by a switch mechanism **(102)** which enables switching between a first distribution mode in which the heating medium is allowed to flow only within each of the low temperature side communication pipes **(92)** and a second distribution mode in which the heating medium is shared by establishing fluid communication with the low temperature side communication pipe **(92)** of the other heating medium circuit **(90).**
